# EUROPEAN PATENT APPLICATION

(11) **EP 1 422 013 A1**
(43) Date of publication of application: **26.05.2004**
(21) Application number: 03025978.2
(22) Date of filing: 13.11.2003
(51) Int. Cl.: B23K 13/01, F17C 1/00

(54) **A tank for storing fluids at operating pressures greater than 100 bar, in particular a gas for fuelling a motor vehicle engine, and manufacturing method thereof**

(30) Priority: 15.11.2002 IT TO20021002
(71) Applicant: C.R.F. Società Consortile per Azioni, 10043 Orbassano (TO) (IT)
(72) Inventor: Paolasini, Sergio, Strada Torino 50 10043 Orbassano Torino (IT); Di Pardo, Massimo, Strada Torino 50 10043 Orbassano Torino (IT); Iammarino, Michele, Strada Torino 50 10043 Orbassano Torino (IT)
(74) Representative: Gallarotti, Franco

(57) **Abstract**

A tank for storing a high pressure fluid comprises a body (12) made of steel with high carbon content or high-resistance steel, whereto is rigidly fastened a valve (69. The body (12) is made up of multiple parts, mutually joined without weld material, comprising at least a terminal element (15) so shaped as to allow to fasten the valve (6) in a protected position.

## Description

The present invention relates to tanks for storing at operating pressures greater than 100 bar, such gases for fuelling the engine of a motor vehicle, and to a method for fabricating tanks of this type.

Tanks of the indicated type comprise a body defining a hermetic chamber for containing the pressurised fluid; to said body is rigidly associated at least one valve, able to allow both loading the fluid into the aforesaid chamber, to fill the tank, and for drawing the fluid from the tank, for its use. Such tanks find application in various industries, amongst which particularly important is the automotive sector, for purposes of storing, at pressures in the order of 200-300 bar, methane gas or hydrogen destined to fuel the internal combustion engine of a vehicle.

The body of the highly pressurised gas tanks currently used in the automotive field is made of steel, by virtue of the relatively low cost of this material and of its solidity. In this regard it should be noted that other types of bottles capable of being used as high pressure gas tanks exist, such as those made of composite material, but their very high cost in effect precludes their spread in the automotive industry.

Steels used to build the body of the aforementioned pressurised gas tanks are of the kind with very high carbon content, because they are the only ones capable of assuring the necessary safety in terms of mechanical strength; in view of this, "34CrMo4" steel is universally adopted by manufacturers of bottles used as tanks for high pressure gases in the automotive field.

Low alloy or low carbon content steels, on the contrary, are not considered suitable for the application in case of high gas pressures, as in the automotive field, due to their reduced mechanical characteristics.

However, welding pieces made of steel with high carbon content is problematic, because it is frequently subject to defects which may compromise the mechanical characteristics of the product obtained. For this reason, the body of known tanks for high pressure gases is manufactured in a single piece of high alloy steel, with techniques characterised by the absence of any welding process; for this purpose the body of the tank is constructed starting from a billet or from a thick metal plate, with press forging techniques, to form a hollow body with an end which must be closed; in some cases the body of the tank is obtained starting from a tube, in which case both its ends must be closed; closing the end of the body (in case of construction starting from billet or thick metal plate) or both its ends (in case of construction starting from a tube) is achieved by fluoforming, which consists in the progressive hot deformation, such as to approach them to each other, the areas to be closed.

With reference to the automotive industry, a noticeable problem is due to the bulk of the tanks or bottles of the indicated type; in fact, it is evident that the volume taken up by the tank assumes a fundamental role because, the greater the quantity of gas to be stored there, the greater will be the unrefuelled range of the respective vehicle.

In case of post-sale installation, i.e. on car models that did not originally contemplate gas fuel, the tank is almost always positioned in the luggage compartment; in the case of motor car models designed from the outset for gas fuel, the tank is instead housed under the vehicle floor. In both the above cases, space exploitation is vital, because space destined to house the gas tank must not be subtracted from the passenger or from the luggage compartment of the motor car. In this regard it should also be noted that natural gas, compressed to the pressure of about 200 bar and at the ambient temperature of 25°C as for use in the automotive field, requires a storage volume that is three times greater than that of petrol, for the same unrefuelled range provided to the vehicle.

Other problems relating to high pressure gas tanks according to the current state of the art are linked to regulatory constraints, which negatively affect the useful dimensions of the tanks; in this view, still with reference to the automotive industry, the area where the valve is attached to the tank body is universally deemed to be a weak spot or in any case an area to be protected with particular care: for this reason, dedicated regulations prescribe a minimum safety distance between the valve and the vehicle perimeter, construed as the exterior side or any other part of the frame or body subject to impact in case of accident (in Italy, for instance, the distance in question is set to 150 mm). The aforesaid regulator constraints clearly reduce the lay-out available on the vehicle for housing the tank, with a consequent loss of potential capacity to store the pressurised fuel.

The present invention aims to solve one or more of the above drawbacks, and in particular to:
- make simpler, quicker and more economical the manufacture of tanks for gas at operating pressures greater than 100 bar, in particular being comprised between 200 and 300 bar, whilst guaranteeing their necessary mechanical robustness.
- reduce current critical housing issues typical of prior art tanks, whilst guaranteeing the necessary degree of safety.

These and other aims are achieved, according to the invention, by a tank for storing a fluid for fuelling the engine of a motor vehicle at operating pressures greater than 100 bar, in particular comprised between 200 and 300 bar, having the features of claim 1.

Equally, the aforesaid aims are achieved according to the invention by a method for manufacturing a tank for storing a fluid at operating pressure greater than 100 bar, in particular a gas for fuelling the engine of a motor vehicle, having the features of claim 13.

Preferred characteristics of the tank and of the method according to the invention are set out in the accompanying claims, which shall be deemed to be an integral part of the present invention.

Additional aims, characteristics and advantages of the present invention shall become readily apparent from the detailed description that follows and from the accompanying drawings, provided purely by way of explicatory and non limiting example in which:
- Figure 1 is a perspective view of a known high pressure gas tank;
- Figure 2 is a perspective view of a first possible embodiment of a high pressure gas tank according to the invention;
- Figure 3 is an exploded view of the tank of Figure 2;
- Figure 4 is a perspective view of a component of the tank of Figures 2 and 3;
- Figure 5 is a section according to the line V-V of Figure 4;
- Figure 6 is a perspective view of a second possible embodiment of a high pressure gas tank according to the invention;
- Figure 7 is an exploded view of the tank of Figure 6;
- Figure 8 is a perspective view of a component of the tank of Figures 6 and 7;
- Figure 9 is a section according to the line IX-IX of Figure 8;
- Figure 10 is a section view of a possible embodiment variation of the component of Figure 8;
- Figure 11 is a section view of an additional possible embodiment variation of the component of Figure 8;
- Figures 12A, 12B and 12C are schematic plan views of a possible use of a tank according to Figure 2, of a tank according to Figure 1 and of a tank according to Figure 6, respectively;
- Figures 13 and 14 are sectioned schematic representations showing the steps of an advantageous method for constructing a tank according to the invention;
- Figure 15 is a sectioned schematic view of two components used for the construction of a tank according to the method of Figures 13 and 14;
- Figures 16 and 17 show two details of Figure 15, in enlarged scale, in the case of two possible implementations of the method according to the invention.

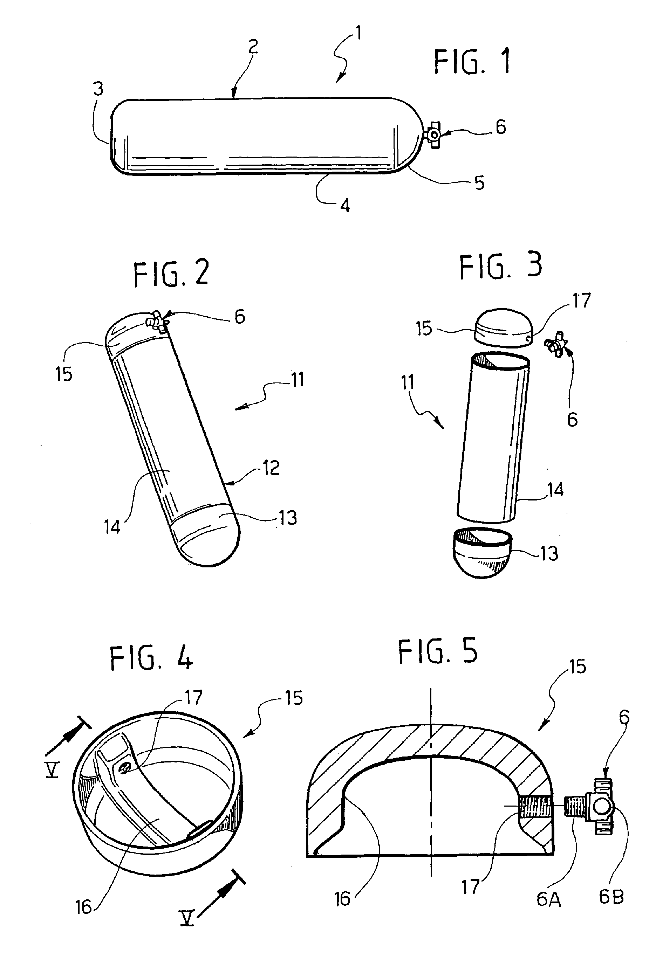

In Figure 1, the reference number 1 globally designates a known tank for storing a high pressure fluid; in the exemplified case, the bottle 1 is of the kind commonly used as a motor vehicle tank, for containing methane gas at a pressure variable between 200 and 300 bar, necessary for fuelling an internal combustion engine.

The bottle 1 has a body 2 having a bottom portion 3, an intermediate portion 4 and a head portion 5; the bottom portion 3 has a substantially flat shape, the intermediate portion 4 a globally cylindrical, hollow shape, and the head portion 5 has substantially hemispherical or cap shape.

The shape shown in Figure 1 is the typical one of the case in which the body 2 is obtained in a single piece, by press forging a billet or a thick plate of steel, to form first the portions 3 and 4; the portion 5 is then obtained by means of fluoforming, deforming an end part of the intermediate portion 4. Alternatively, the intermediate portion of the body 2 can be obtained starting from a tube, in which case both ends of the tube are shaped in the form of a hemispherical cap by fluoforming.

The reference number 6 designates a valve, whose construction is known in itself, provided to enable both to load the methane gas into the bottle 1, in case of refuelling, and to draw the gas from the bottle, for purposes of fuelling the engine of the motor vehicle; for this purpose, in use, the valve 6 is connected to suitable pipelines for loading and drawing the gas, not shown herein. For purposes of anchoring the valve 6 to the body 2, a threaded part of the valve is screwed in a through hole fitted with lead screw provided at the top of the head portion 5.

In the construction type shown in Figure 1, which is the one universally used in the case of steel bottles for automotive use, the valve 6 projects from the body 2, in a position aligned with the axis thereof. This arrangement derives from the need to position the valve 6 in a point in which the thickness of the body 2 is high, in order to provide a sufficiently long threaded through hole therein, such as to assure a secure anchoring of the valve 6. The fluoforming process used to construct the head part 5 allows for this purpose to obtain a sufficiently thick area for anchoring the valve 6.

Note that the geometry and the technique for constructing the tanks as identified above with reference to Figure 1 have remained substantially the same as those used for bottles for contain technical gases provided for essentially static use, these known bottles having no bulk criticalities.

Such a construction has some drawbacks due to high investments required for allowing different diameters and length to be obtained. Another drawback is that, due to this technique for forming the body 2, the valve 6 can be positioned practically only in correspondence with the top of the portion 5, projecting therefrom. This has negative effects on the overall size of the bottle 1, because the valve 6 must, for regulatory reasons, be kept at a certain distance from possible impact surfaces; consequently, the useful space which can be occupied by the body 2 is smaller, which detracts from its gas storage capacity.

In accordance with an important aspect of the invention, the degree of safety and the storage capacity of the tank are increased by means of a particular modelling of the tank body, and in particular of its head end, to allow the placement of the respective valve in a safer or more protected position.

Figures 2 and 3 for this purpose show a first possible embodiment of a tank for storing fluids at operating pressures greater than 100 bar according to the present invention, whose body is formed by the union of at least two distinct parts.

In the example shown in Figures 2 and 3, the tank according to the invention, globally designated 11, has a body 12 formed by the union of a hollow intermediate element, designated 14, and by two terminals 13 and 15, which respectively constitute the bottom and the head of the body 12. The intermediate element 14 ha substantially cylindrical shape, whilst the terminals 13, 15 are globally cup shaped, in particular they are shaped as hemispherical caps. The three components 13, 14 and 15 of the body 2 are made of hardening and tempering steel with high equivalent carbon content with breaking loads comprised between 800 e 1200 Mpa (such as chromium-manganese or chromium-molybdenum steel, or of high-strength steels, such as "P690QL1" steel).

The valve 6 is fastened to the head terminal 15 in lateral position, this positioning possibility being allowed by virtue of a particular conformation of the terminal.

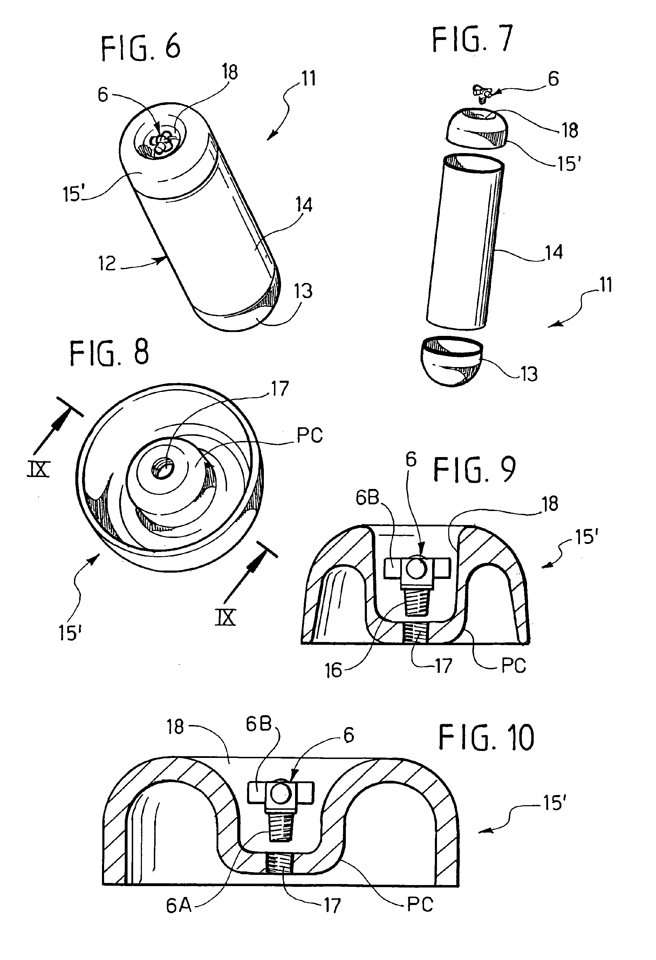

For this purpose, Figure 4 shows the inner part of the terminal 15 and Figure 6 shows a section of the same terminal; as is readily apparent from said figures, along the arc of the cap that constitutes the terminal 15 is defined a reinforcing rib, designated with the reference 16. Said rib is obtained directly on the piece 15 and it has the necessary thickness to obtain a lead screw 17 or other type of through hole in the desired position and with the desired length; in this hole is screwed the threaded fastening part 6A of the valve 6, the remaining connecting part 6B of the valve remaining instead outside the body 12.

The length development of the reinforcing rib 16 can be limited to the segment involved for fastening the valve 6 or, as shown in the example of Figures 4 and 5, it can extend along the entire arc of the cap constituting the terminal 15.

The terminal 15 provided with the rib 16 can be obtained in simple, rapid fashion by press forging from steel billet of the type set out above, because this technology is well suited for the complexity of the profile needed for the piece. The bottom terminal 13 can also be obtained by press forging from billet of high alloy or high strength steel and have a similar shape to that of the terminal 15, but without the respective rib 16 and the respective hole 17. It is clear that, due to production standardisation requirements, the terminal 13 could be wholly identical to the terminal 15, with the exception of the presence of the hole 17. Obviously, both terminals 13, 15 are constructed with the profile thickness necessary for the gas tightness of the tank 11.

The intermediate element 14 instead is constituted by a tube made of the same material constituting the terminal 13, 15.

Figures 6 and 7 show a second possible embodiment of the tank or bottle according to the invention; in these figures, the same reference numbers as those of the previous figures are used, to indicate elements that are technically equivalent to those described previously.

In the case exemplified in Figures 6 and 7, too, the bottle 11 according to the invention has a body 12 formed by the union of an intermediate element, designated by the reference number 14, a bottom terminal, designated 13, and a head terminal, designated 15'.

According to the proposed embodiment variation, the head terminal 15' is shaped as to provide itself protection to the valve 6, in particular providing within the terminal itself a compartment within which the valve 6 can be housed completely, as in the case shown in the figures, or for the most part.

The dimensions of the aforesaid compartment for the containment and protection of the valve, designated in Figures 6 and 7 by the reference number 18, can vary with those of the tank 11 and according to the type of valve 6 in use; by way of indication, the compartment 18 is similar to a cylindrical volume having a diameter of about 90 millimetres and a height of about 100 millimetres.

As Figures 8 and 9 show, the compartment 18 is obtained by appropriately shaping the terminal 15', i.e. defining a concave seat therein, designated PC in Figure 8, on the bottom whereof is provided a threaded through hole 17; in this hole 17 is inserted and screwed the threaded part 6A of the valve 6, whilst the remaining part 6B of the same valve is housed within the compartment 18.

The shape of the terminal 15' can be obtained by means of press forging technologies, starting from a billet or metal plate. Figure 9 shows in particular a section of terminal 15' obtained by press forging starting from a billet of high alloy or high strength steel; this technique for obtaining it is preferable when the terminal to be obtained has relatively small dimensions, because press forging from billet allows to achieve reduced curvature radii in the piece; moreover, with this process, as shown in Figure 9, the thickness of the walls of the terminal 15' can be variable in the different areas, both for structural requirements, and to house the valve 6.

The press forging of the terminal 15' from metal plate is instead preferably used when the dimensions of the tank 11, and hence of the terminal itself, are greater and wall thickness can be uniformly greater in all parts of the geometry of the piece. Figure 10 shows, by way of example, a terminal 15' obtained from press forging a thick plate of steel with high carbon content or high-strength steel.

In the case of the bottle 11 of Figures 6 and 7, too, the bottom terminal 13 can be obtained by press forging from steel billet or plate and have similar shape to that of the respective terminal 15', but without the concave portion PC which defines the protection compartment 18 and the respective hole 17. It is clear that, due to production standardisation requirements, the terminal 13 could be wholly identical to the terminal 15', with the exception of the presence of the hole 17.

In the embodiment of Figure 10 the compartment 18 housing and protecting the valve 6 is integrally obtained in a terminal 15' obtained from steel plate; as stated, this technique can be used when the terminal to be obtained is not small, which would entail reduced curvature radii in the piece.

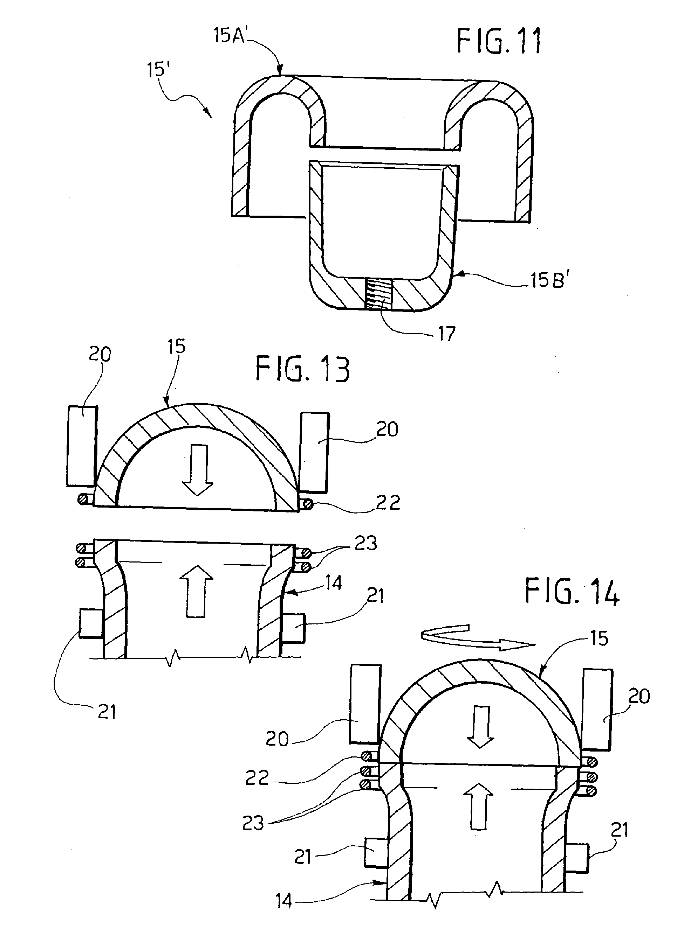

Figure 11 shows an additional possible embodiment variation, which allows to overcome the technological limits of plate press forging when the dimensions of the terminal to be obtained are reduced. This solution consists of forming the terminal 15' in two parts, and specifically an upper part, designated by 15A', folded back towards the interior, whereto is joined a lower part, designated by 15B', substantially shaped as a cup. As can be readily inferred, the overall geometry of the component formed by the two parts 15A' and 15B' allows, in this case as well, to form in terminal a compartment to house the valve 6 in protected position.

Note that the embodiment of Figure 11 can also be provided to house at least the prevalent part of the valve 6 within the bulk of the head terminal 15' when the thickness of the plate used to obtain the upper part 15A is not adequate to obtain a sufficiently long threaded hole 17 therein.

The embodiments according to the invention described above allow to enhance the functionality of tanks being provided for storing high pressure gases, at operating pressures greater than 100 bar, by virtue of the possibility of placing the valve 6 in positions which have a positive impact both on safety, since the valve is better protected in case of impact, and on the fuel storage capacity, thanks to an increase in the volume available to house the tank body.

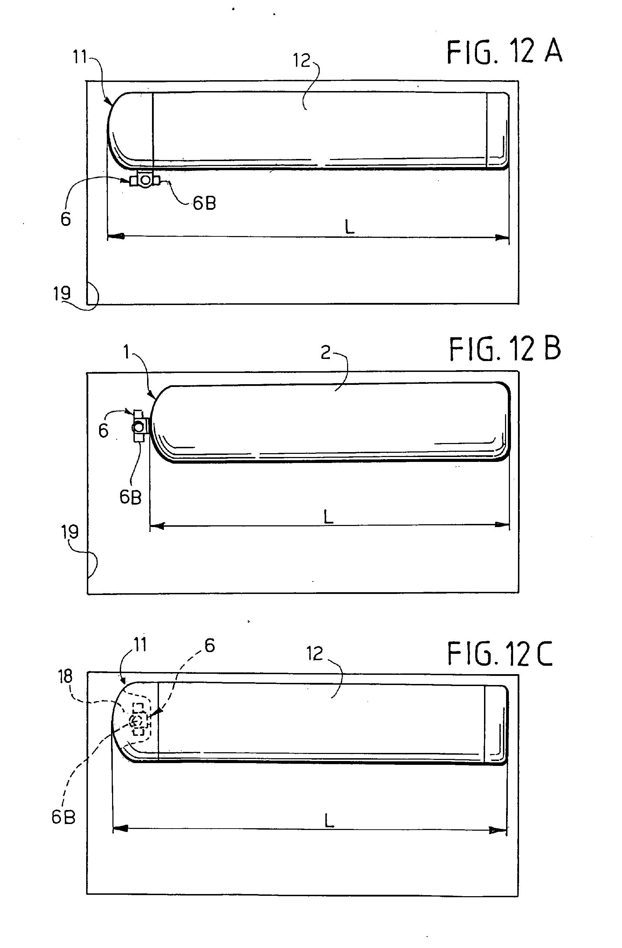

The aforesaid advantages are readily apparent from the exemplifying representation of Figures 12A, 12B and 12C, where the reference number 19 designates the luggage compartment of a generic small motor car. Figures 12A, 12B and 12C respectively show the case of housing, in said luggage compartment 19, of a tank 11 according to the embodiment of Figure 2-5, of a tank 1 according to the prior art as per Figure 1 and lastly of a tank 11 according to the embodiment of Figures 6-10.

In these figures, the reference L designates the dimension of maximum axial or longitudinal bulk of the bodies 2 or 12 of the three tanks, said dimension L being delimited by the head and bottom ends of the bodies themselves.

As is immediately apparent, for the same dimensions of the luggage compartment 19 (and for the same cross section of the tank), the longitudinal extension of the body 12 of the tanks 11 of Figures 12A and 12C is greater than that of the tank 1 of Figure 12B.

The greater longitudinal extension of the bodies 12, and hence their greater storage capacity, is the direct consequence of the fact that, according to the invention, the valve 6 can be positioned in safe areas of the bodies.

Comparing Figure 12A and Figure 12B, it is readily apparent that, in the first case, the distance between the projecting portion 6B of the valve 6 and the wall closest thereto of the luggage compartment can be greater than the minimum distance mandated by regulations (case of Figure 12B), and in any case very distant from the surface of the luggage compartment facing it, which obvious advantages in terms of safety; this projecting portion 6B of the valve is in any case included within the dimension of maximum bulk L of the body 12.

The distance between the portion 6B of the valve 6 and the respective wall of the luggage compartment 19 is instead substantially similar in the case of the tanks 1 and 11 of Figures 12C and 12B. However, a comparison between said figures readily shows that, in the second case, the length of the tank is greater, with the portion 6B of the valve 6 remaining within the dimension of maximum bulk L of the body 12, and in any case in a compartment that protects it from contact with any surfaces of the motor car which may become deformed in case of accident.

Note that the particular positioning of the valve 6, provided according to the invention is not strictly constrained to the transformation processes necessary to produce the tanks 11 because, potentially, current technologies could also be developed to provide such functionalities. However, in view of the aim of facilitating the production of bottles of various sizes, for the purpose of their widespread application to various ranges of motor cars, and of containing the investment required for production equipment, redesigning the tank in accordance to the invention would seem advisable. On this point, it should be recalled once again that the fluoforming process required by the prior art entails very high investments in installations and machinery, so much so that the production of steel tanks and bottles of high pressure gas is practically standardised from the standpoint of product dimensions; this in consideration of the fact that the amount of investments required to produce several variations of bottles by fluid forming would be prohibitive for most manufacturers of these components. For these reasons, heretofore, motor car manufacturers have been in effect forced to "adapt" their products to the bottles or tanks available on the market.

On the contrary, according to the invention, the tank is conceived to be "adapted" to the requirements of the automotive manufacturer, and designed as an object obtained from the union of multiple parts, preferably a tube, i.e. the intermediate element 14, and two elements press forged into the desired shape, i.e. the terminals 13, 15 or 15'. This solution, in addition to the aspects of greater storage capacity and enhanced safety described above, also allows to obtain important advantages in terms of product modularity, productive standardisation, easier inventory management and reduced investment costs with respect to current ones.

To avoid the problems linked with welding steels with high carbon content, according to the invention, the union of the pieces constituting the body 12 of the tank 11 is accomplished by means of junction techniques without weld material and without fusion, which guarantee unions with good mechanical characteristics also for high alloy steels.

In this view, the mutual fastening of the pieces constituting the body 12 of the tank 11, i.e. the terminals 13, 15 or 15' and the intermediate tubular element 14 is accomplished by means of a new junction technology, hereinafter defined as "roto-forging".

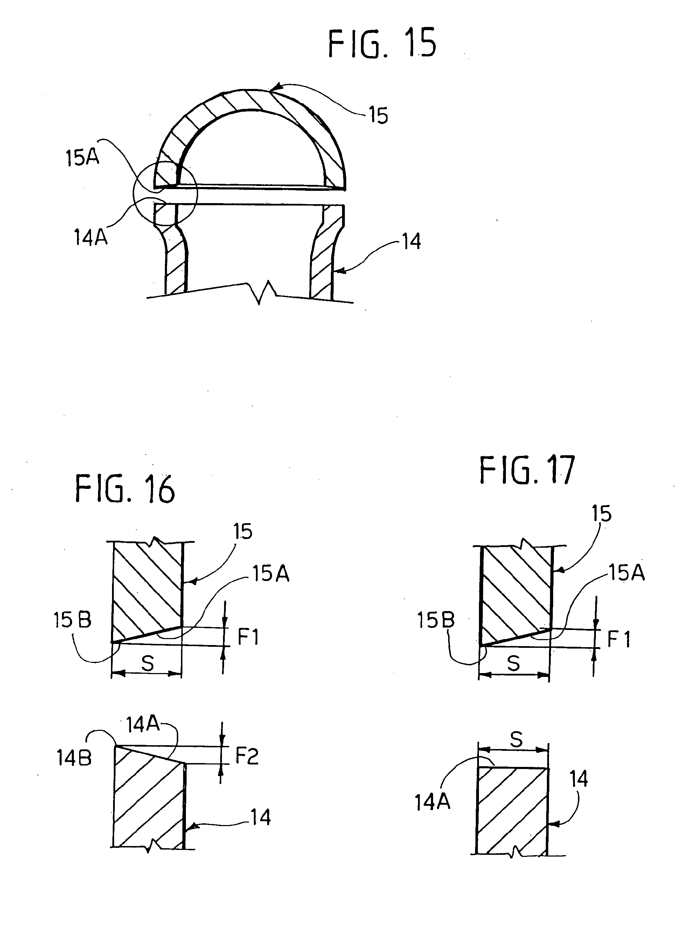

The execution of said junction process is represented schematically in Figures 13 and 14. These figures show section views of the two pieces to be joined, represented in the specific case by the head terminal 15 and by the intermediate element 14, which in this case has a slightly widened end portion; each piece is sustained by respective grips, known in themselves, designated by the reference numbers 20 and 21.

According to the proposed process, the two pieces 14 and 15 are moved progressively closer, by an appropriate linear displacement of the grips 20 towards the grips 21, or vice versa. When the two pieces 14, 15 are in mutual contact, as shown in Figure 14, a heating of the respective material to join is achieved, by means of parasitic currents produced by suitable inductor means. located in proximity to the mutually facing ends of the intermediate element 14 and of the terminal 15; the aforesaid inductor means, which can be of a type known in itself, are designated by the references 22 and 23.

This is followed by the low-speed rotation of a piece relative to the other, for a time interval which may vary according to the thickness of the material, but in any case able to assure an escape of the material itself from the junction area towards the exterior of the body to be obtained. The rotation can take place by rotating a single piece relative to the other, in a given direction, or by rotating the two pieces in opposite directions.

Lastly, a forging step follows, by the application of a compression force between the two pieces 14, 15 to be joined, able to produce the deformation and the union in the solid state of the parts in contact. Therefore, according to the invention, the union between the pieces 14, 15 is achieved without adding material and without having the steel constituting the pieces reach the liquid state, in absence of fusion. This allows to avoid the problems which are typical of traditional processes for welding steels with high carbon content.

In Figures 16 and 17, relating to enlarged details of Figure 15 according to two respective implementation variations, possible geometries suited to the aforesaid purpose are shown.

In the case of Figure 16, the end surfaces of each piece 14 and 15, designated by the references 14a and 15a, are inclined so that the respective summit point 14b, 15b is substantially in correspondence with the outer circumferential edge of the same surfaces.

This geometry allows the progressive contact between the parts to be joined in the pasty plastic state and the achievement, during the aforesaid forging step, of a slight upsetting of material, with escape thereof from the junction area towards the exterior of the body to be obtained.

The same effect can optionally be obtained by providing the aforesaid inclined geometry also for only one of the surfaces 14a, 15a, while the other one may be horizontal; Figure 17 shows, for this purpose, the case in which the intermediate element 14 has its respective surface 14a planar and the terminal 15 has its surface 15a inclined so that the respective summit point 15b is in correspondence with its circumferential edge; obviously, the configuration could also be inverse with respect to the one shown in Figure 16, i.e. with the surface 15a horizontal and the surface 14a inclined in the aforesaid manner.

The axial distance between the inner and outer circumferential edges of the surfaces 14a and 14b, i.e. the dimensions designated by the references F1 and F2 in Figures 15 and 16, preferably vary from 0 to 10 times the thickness "s" of the material constituting the pieces 14, 15.

The invention has been described with particular reference to the construction of tanks or bottles for application in the automotive field, but it is clear that it is susceptible to be used in any other field exhibiting the same problems, ed in particular those linked to the necessity of assuring an adequate mechanical strength at operating pressures greater than 100 bar. Similarly, although use of the above tanks has been described with reference to the storage of methane gas, it is clear that they are suitable for storing any other component at operating pressures greater than 100 bar, and namely substantially comprised between 200 and 300 bar.

Naturally, without altering the principle of the invention, the construction details and the embodiments may vary from what has been described and illustrated purely by way of example.

In the embodiments described above, the body 12 of the tanks 11 is made of three distinct pieces, but it could clearly be obtained by joining only two half-shells of adequate dimensions, obtained through the same techniques mentioned above (press forging from billet or thick plate).

The surfaces 14a, 15a of Figures 15 and 16 could also be curved, and in particular concave shaped.

With reference to the embodiment of Figure 11, the two pieces 15A' and 15B' could be mutually joined by the roto-forging method according to the invention. Still with reference to Figure 11, it should be noted that the two pieces 15A' and 15B' could be shaped in such a way that the respective union surfaces are external to the compartment 18. Although this is not strictly necessary, the body 13 can thereby be formed by joining first to the intermediate element 14 the bottom terminal 13 and the piece 15A', then exploiting the opening thereof to remove any residues of the process of roto-forging the inner walls of the bottle body; subsequently, the body itself would be completed by joining to the piece 15A' the piece 15B', in the manner described above.

Naturally, the shape of a head terminal 15, 15' could be different from the shape of the bottom terminal 13, for instance as shown in Figures 12A and 12C.

Lastly, it should be noted that, with reference to the embodiment of Figures 6-10, the connecting part 6B of the valve 6 could also slightly project from the respective housing compartment 18, allowing in any case to enhance the working capacity of the tank 11 according to the invention with respect to the prior art.

The invention according to the embodiments of Figures 2-5 and 6-11 allows, if necessary, to provide also two distinct valves for a same bottle, for instance one for loading the fluid and the other one for drawing it; each of said valves can be positioned in correspondence with an end of the body 12, allowing in any case to obtain the advantages described above; in the case of the embodiment of Figures 2-5, both the aforesaid valves could also project from two opposite sides of the same head terminal 15.

## Claims

1. A tank for storing a fluid for fuelling the engine of a motor vehicle at operating pressures greater than 100 bar, in particular comprised between about 200 and 300 bar, comprising
- a body (12) for containing the fluid made of steel, the body extending longitudinally between a respective bottom end (13) and a respective head end (15; 15'), the bottom end (13) and the head end (15; 15') delimiting an axial bulk dimension (L) of the body (12),
- a valve device (6), for loading the fluid into the body (12) and/or drawing the fluid from the body (12), the device (6) having a fastening portion (6A), operatively inserted and blocked in a through opening (17) defined in a wall of the body (12), and a connecting portion (6B), projecting from said wall outside the body (12),
**characterised in that** said body (12) is formed by at least two distinct components (13, 14, 15; 13, 14, 15'; 13, 14, 15A', 15B') rigidly united to each other without added or weld material and without fusion of material.

2. A tank, as claimed in claim 1, **characterised in that** the steel is selected from the group consisting of hardening and tempering steels with high equivalent carbon content with breaking loads comprised between 800 e 1200 Mpa.

3. A tank as claimed in claim 1 or 2, **characterised in that** said components (13, 14, 15; 13, 14, 15'; 13, 14, 15A', 15B') comprise at least
- a head terminal (15; 15') defining said head end,
- a bottom terminal (13) defining said bottom end,
- an intermediate element (13) between the head terminal (15; 15') and the bottom terminal (13),
wherein in particular the head terminal (15; 15') and the bottom terminal (13) have substantially cup shape and the intermediate element (14) has substantially cylindrical shape.

4. A tank as claimed in claim 3, **characterised in that** the head terminal (15) has a reinforcing rib (16) in correspondence with which is defined said through opening (17).

5. A tank as claimed in claim 3, **characterised in that** a concavity is defined in the head terminal (15'), on the bottom of which said through opening (17) is formed, the connecting portion(6B) of the device (6) being housed within said concavity (PC).

6. A tank, as claimed in claim 3, **characterised in that** at least one of said components (13, 15; 13, 15') is formed in a press forged steel piece.

7. A tank, as claimed in claim 3, **characterised in that** at least one of said components (13, 15; 13, 15') has a wall with variable thickness and is formed in a single piece press forged from steel billet.

8. A tank, as claimed in claim 3, **characterised in that** at least one of said components (13, 15; 13, 15') has a wall with substantially constant thickness and is formed in a single piece press forged from plate.

9. A tank, as claimed in claim 5, **characterised in that** the head terminal (15') is formed in two mutually joined pieces (15A', 15B'), whereof at least one defines a substantial part of said concavity (18).

10. A tank, as claimed in claim 1, **characterised in that** at least a prevalent part of the connecting portion (6B) of the valve device (6) lies within said axial bulk dimension (L).

11. A tank as claimed in claim 1, **characterised in that** the connecting portion(6B) of the device (6) projects laterally from the body (12), with reference to the longitudinal development thereof.

12. A tank as claimed in claim 1, **characterised in that** at least the prevalent part of the connecting portion(6B) of the device (6) is positioned within a compartment (18) defined in the head end of the body (12).

13. A method for manufacturing a tank for a fluid at operating pressures greater than 100 bar, in particular a gas for fuelling the engine of a motor vehicle, the method comprising the steps of
- forming a longitudinally extended hollow body (12) made of steel, in one of whose walls is defined a through opening (17),
- constructing a valve device (6) with a fastening portion (6A) and a connecting portion (6B),
- fastening the valve device (6) to the body (12), inserting and blocking said fastening portion (6A) in said through opening (17), with said connecting portion (6B) projecting from said wall outside the body (12),
wherein, for the purposes of forming the body (12), a first and a second component (14, 15) of the body itself are deformed in a respective end area (14a, 15a), with the union in the pasty plastic state of at least part of the material constituting the end area of the first component (14) with at least part of the material constituting the end area of the second component (15), in the absence of added or weld material and without fusion of material, and wherein each of the first and the second component (14, 15) has a respective junction surface (14a, 15a), which extends between a respective inner circumferential edge and a respective outer circumferential edge, and wherein said deformation and union in the pasty plastic state is achieved by means of the following operations:
i) supporting the first and the second component (14, 15) by means of respective grips (21, 20), with the junction surface (14a) of the first component (14) facing the junction surface (15a) of the second component (15);
ii) providing inductor means (22, 23) in proximity to a union portion of the first and of the second component (14, 15) which is located in proximity to the respective junction surface (14a, 15a);
iii) axially approaching the first component (14) to the second component (15), until the respective junction surfaces (14a, 15a) come in contact;
iv) heating the junction portion of the first and of the second component (14, 15) by means of parasitic currents generated by the inductor means (22, 23);
v) rotating at low velocity at least one between the first and,the second component (14, 15) relative to the other;
vi) applying a compression force between the first and the second component (14, 15).

14. A method as claimed in claim 13, wherein the compression force between the first and the second component (14, 15) is provided to produce a slight upsetting of the material, with escape thereof from the junction area towards the exterior of the body to be obtained.

15. A method as claimed in claim 14, wherein the junction surface (14a) of the first component (14) is oblique, to define a respective summit point (14b) which is substantially in correspondence with the outer circumferential edge of the junction surface (14a).

16. A method as claimed in claim 14, wherein the junction surface (15a) of the second component (15) is oblique, to define a respective summit point (15b) which is substantially in correspondence with the outer circumferential edge of the junction surface (15a).

17. A method as claimed in claim 16, wherein the junction surface (15a) of the first component (15) is substantially horizontal.

18. A method as claimed in claim 13, wherein the axial distance (F1, F2) between the inner and outer circumferential edges of the junction surface (14) is between zero and ten times the thickness (s) of the material constituting the union portion.

19. A method as claimed in claim 13, wherein, for the purposes of the execution of the operation v), the first and the second component (14, 15) are made to rotate in opposite directions.

20. A method as claimed in claim 13, wherein the first component (14) is a tube.

21. A method as claimed in claim 13, wherein the second component (15) is press forged from billet.

22. A method as claimed in claim 13, wherein the second component (14) is press forged from plate.

23. A method as claimed in claim 13, **characterised in that** the steel is selected from the group consisting of hardening and tempering steels with high equivalent carbon content.

24. A tank for storing a high pressure fluid, in particular a gas for fuelling the engine of a motor vehicle, comprising a body (12) formed by at least two distinct components (13, 14, 15; 13, 14, 15'; 13, 14, 15A', 15B') made of hardening and tempering steel with high equivalent carbon or high-strength steel, rigidly joined to each other by means of the method as claimed in one or more of the claims 13 through 24.
